(19) Europäisches Patentamt
European Patent Office
Office européen des brevets

(11) Veröffentlichungsnummer: **0 256 319**
**A1**

(12) **EUROPÄISCHE PATENTANMELDUNG**

(21) Anmeldenummer: **87110322.2**

(51) Int. Cl.[4]: **C07F 9/50** , C07F 9/53

(22) Anmeldetag: **17.07.87**

(30) Priorität: **08.08.86 DE 3626969**

(43) Veröffentlichungstag der Anmeldung:
**24.02.88 Patentblatt 88/08**

(84) Benannte Vertragsstaaten:
**BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Weferling, Norbert, Dr.**
**Schaesbergstrasse 13**
**D-5030 Hürth(DE)**

(54) **Neue s-Butyl-di-n-alkylphosphane, -phosphanoxide und -phosphansulfide sowie Verfahren zu ihrer Herstellung.**

(57) Die Erfindung betrifft neue s-Butyl-di-n-alkylphosphane, -phosphanoxide und -phosphansulfide der allgemeinen Formel

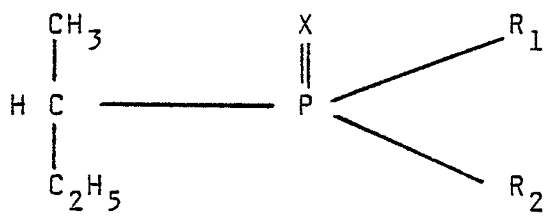

in welcher $R_1$ und $R_2$ gleiche oder verschiedene geradkettige, unsubstituierte Alkylketten mit 5, 6, 8 oder 10 C-Atomen bedeuten und in welcher X für ein Elektronenpaar, O oder S steht, sowie deren intermolekulare Gemische. Außerdem werden Verfahren zur Herstellung dieser Verbindungen beansprucht.

EP 0 256 319 A1

## Neue s-Butyl-di-n-alkylphosphane, -phosphanoxide und -phosphansulfide sowie Verfahren zu ihrer Herstellung

Die vorliegende Erfindung betrifft neue s-Butyl-di-n-alkylphosphane, s-Butyl-di-n-alkylphosphanoxide und s-Butyl-di-n-alkylphosphansulfide sowie Verfahren zu ihrer Herstellung.

Tertiäre Phosphane können durch die Umsetzung von Phosphorwasserstoff mit Olefinen gewonnen werden.

Tertiäre Phosphanoxide können durch eine Oxidationsreaktion aus den entsprechenden tertiären Phosphanen hergestellt werden.

Aus der DE-PS 899 040 ist es bekannt, äquivalente Mengen von Phosphorwasserstoff mit Olefinen bei erhöhter Temperatur in Gegenwart eines peroxidischen Katalysators umzusetzen. Entsprechend wird dabei ein Gemisch aus etwa 85 Gew% Trialkylphosphin und etwa 15 Gew% Mono-bzw. Dialkylphosphin erhalten.

Aus dem Journal of Organic Chemistry (1961), Bd. 26, Seite 5139 ist weiter bekannt, daß durch die Verwendung eines stöchiometrischen Überschusses an Phosphorwasserstoff die Bildung des Trialkylphosphans erniedrigt wird, zugunsten einer Monoalkylphosphan-Bildung.

Gemäß der EP-0 095 453 A2 wird s-Butyl-di-(3-hydroxipropyl)-phosphan erhalten, wenn Phosphorwasserstoff bei 85 -90°C mit Buten-2 unter Verwendung von Azo-di-isobutyronitril als Radikalbildner umgesetzt wird und man das erhal tene Zwischenprodukt mit Allylalkohol und wiederum in Gegenwart von Azo-di-isobutyronitril bei 85 - 90°C reagieren läßt.

Dieses Phosphan wird nach einer Vakuumdestillation sodann in Isopropanol als Lösemittel mit Wasserstoffperoxid oxidiert. Nach einem weiteren Reinigungsschritt wird ein Gemisch erhalten, das aus s-Butyl-di-(3-hydroxipropyl)-phosphanoxid und 3-Hydroxipropyl-di-s-butylphosphanoxid besteht. Das so erhaltene Phosphanoxid-Gemisch wird als Flammschutzmittel in Kunststoffen verwendet.

Es hat sich jedoch herausgestellt, daß dieses Phosphanoxid-Gemisch Nachteile aufweist:

Das Gemisch ist in Wasser besser löslich als in unpolaren Lösemitteln. Bei der Einarbeitung ist nicht immer eine gleichmäßige Verteilung des Flammschutzmittels in den Kunststoffen gewährleistet. Wenn das Flammschutzmittel oberflächlich aufgebracht wird, beispielsweise bei Geweben, wird es wegen seiner guten Wasserlöslichkeit ausgewaschen.

Gegenstand der vorliegenden Erfindung sind nunmehr neue Verbindungen, welche die vorgenannten Nachteile nicht aufweisen. Solche Verbindungen sind s-Butyl-di-n-alkylphosphane, -phosphanoxide und -phosphansulfide der allgemeinen Formel

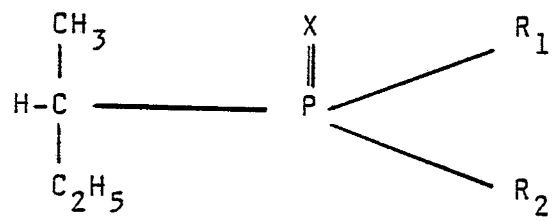

in welcher $R_1$ und $R_2$ gleiche oder verschiedene geradkettige, unsubstituierte Alkylketten mit 5, 6, 8 oder 10 C-Atomen bedeuten und in welcher X für ein Elektronenpaar, O (Sauerstoff) oder S (Schwefel) steht, sowie deren intermolekulare Gemische.

Im einzelnen seien genannt:

s-Butyl-di-n-pentylphosphan, s-Butyl-di-n-pentylphosphanoxid und s-Butyl-di-n-pentylphosphansulfid.
s-Butyl-di-n-hexylphosphan, s-Butyl-di-n-hexylphosphanoxid und s-Butyl-di-n-hexylphosphansulfid.
s-Butyl-di-n-octylphosphan, s-Butyl-di-n-octylphosphanoxid und s-Butyl-di-n-octylphosphansulfid.
s-Butyl-di-n-decylphosphan, s-Butyl-di-n-decylphosphanoxid und s-Butyl-di-n-decylphosphansulfid.

Schließlich seien an dieser Stelle auch neue intermolekulare Gemische genannt, wie z.B.

s-Butyl-n-hexyl-n-octylphosphan im intermolekularen Gemisch mit s-Butyl-di-n-hexylphosphan und s-Butyl-di-n-octylphosphan.

s-Butyl-n-hexyl-n-octylphosphanoxid im intermolekularen Gemisch mit s-Butyl-di-n-hexylphosphanoxid und s-Butyl-di-n-octylphosphanoxid sowie schließlich

s-Butyl-n-hexyl-n-octylphosphansulfid im intermolekularen Gemisch mit s-Butyl-di-n-hexylphosphansulfid und s-Butyl-di-n-octylphosphansulfid.

Intramolekular verschiedene Phosphane sowie deren Oxide und Sulfide, wie z.B. s-Butyl-n-hexyl-n-octylphosphan mit drei verschiedenen R-Resten, sowie dessen Oxid und/oder Sulfid sind nur im vorgenannten intermolekularen Gemisch erhältlich, und zwar in etwa der folgenden Zusammensetzung

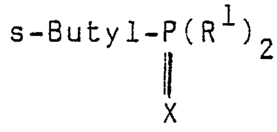 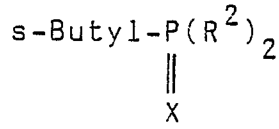 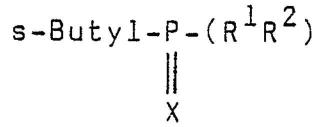

~ 25 % ~ 25 % ~ 50 %

Gegenstand der Erfindung sind weiter die folgenden Verfahren, nach denen alle vorgenannten Verbindungen in guter Reinheit und mit hoher Ausbeute gewonnen werden können.

Im einzelnen besteht das Verfahren zur Herstellung von s-Butyl-di-n-alkylphosphanen der allgemeinen Formel

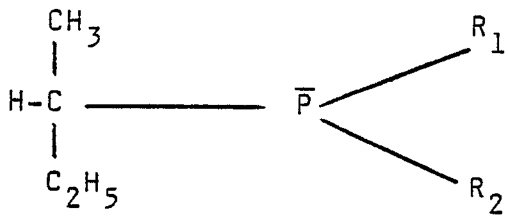

in welcher $R_1$ und $R_2$ gleiche oder verschiedene, geradkettige, unsubstituierte Alkylketten mit 2 bis 16 C-Atomen, insbesondere mit 5, 6, 8 oder 10 C-Atomen, bedeuten, nunmehr darin, daß man s-Butylphosphan mit dem bzw. den entsprechenden n-Alken-1 im stöchiometrischen Überschuß bei erhöhten Temperaturen und gegebenenfalls unter Druck sowie in Gegenwart von Radikalbildnern zu s-Butyl-di-n-alkylphosphan umsetzt und destillativ aufarbeitet.

Vorzugsweise wird man die Umsetzung in einer 2-bis 10-fachen molaren Menge an n-Alken-1, bezogen auf das s-Butylphosphan, durchführen, und zwar bei Temperaturen von etwa 50 - 120°C und - im Falle von Ethylen, Propen, Buten und Penten als n-Alken-1 - bei Drucken zwischen 100 und 2 bar. Hierbei können als Radikalbildner insbesondere Azobisisobutyronitril oder Azobisvaleronitril eingesetzt werden.

Als Reaktant kann gemäß der Erfindung auch ein Gemisch aus n-Alken-1 mit 5, 6, 8 oder 10 C-Atomen verwendet werden, beispielsweise eine Mischung bestehend aus etwa 50 mol% n-Okten-1 und 50 mol% n-Hexen-1.

Schließlich ist Gegenstand der Erfindung ein Verfahren zur Herstellung von s-Butyl-di-n-alkylphosphanoxiden der allgemeinen Formel

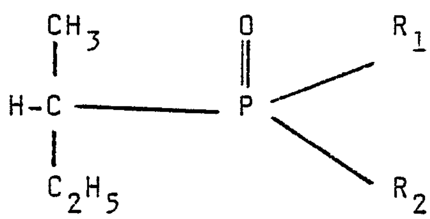

in welcher $R_1$ und $R_2$ gleiche oder verschiedene, geradkettige, unsubstituierte Alkylketten mit 2 bis 16 C-Atomen, insbesondere mit 5, 6, 8 oder 10 C-Atomen, bedeuten, welches dadurch gekennzeichnet ist, daß man das entsprechende s-Butyl-di-n-alkylphosphan mit einer etwa 3o gew%igen Wasserstoffperoxid-Lösung im geringen stöchiometrischen Überschuß reagieren läßt.

Vorteilhafterweise wird man diese Umsetzung unter Kühlung und Rühren durchführen, wobei man anschließend noch bei erhöhter Temperatur von etwa 60 - 90°C nachreagieren läßt.

Weiter ist Gegenstand der Erfindung ein Verfahren zur Herstellung von s-Butyl-di-n-alkylphosphansulfiden der allgemeinen Formel

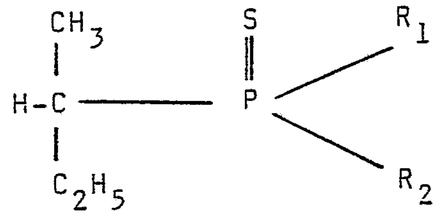

in welcher $R_1$ und $R_2$ gleiche oder verschiedene, geradkettige, unsubstituierte Alkylketten mit bis zu 16 C-Atomen, insbesondere mit 5, 6, 8 oder 10 C-Atomen, bedeuten, welches dadurch gekennzeichnet ist, daß man das entsprechende s-Butyl-di-n-alkylphosphan mit elementarem Schwefel reagieren läßt.

In vorteilhafter Weise wird man diese Umsetzung bei Raumtemperatur durchführen, wobei man anschließend noch bei erhöhter Temperatur von etwa 80 - 120°C nachreagieren läßt. Der Schwefel liegt insbesondere als Schwefelblüte in suspendierter Form vor, wobei man dann die Umsetzung mit einer äquimolaren Menge an Schwefel, bezogen auf das s-Butyl-di-n-alkylphosphan, durchführt.

Die zur Herstellung der erfindungsgemäßen s-Butyl-di-n-alkylphosphanoxide und s-Butyl-di-n-alkylphosphansulfide als Ausgangsprodukte eingesetzten s-Butyl-di-n-alkylphosphane werden nach dem Verfahren der Erfindung hergestellt, wie oben beschrieben.

Die erfindungsgemäßen neuen Produkte können als Flammschutzmittel verwendet werden.

Die nachfolgenden Beispiele dienen zur näheren Erläuterung des erfindungsgemäßen Verfahrens, ohne daß die Erfindung auf die darin genannten speziellen Verfahrensmaßnahmen beschränkt ist.

Beispiel 1

Herstellung von sek-Butylphosphan

In einem 600 ml-Laborautoklaven wurde eine Lösung von 1,65 g Azobisisobutyronitril (ABIN) in 60 ml Toluol vorgelegt und darauf zunächst 56 g (1 Mol) Buten-2, anschließend 68 g (2 Mol) $PH_3$ kondensiert. Die Reaktion wurde durch Erwärmen der magnetisch gerührten Mischung auf 80°C gestartet. Der Fortgang der Reaktion war durch ein anfangs leicht exothermes Verhalten sowie durch allmähliche Druckabnahme von 37 auf 30 bar gekennzeichnet. Nach achtstündiger Reaktionszeit bei 80 - 85°C wurde der Autoklav abgekühlt, entspannt und mit Stickstoff gespült. Das Rohprodukt (120 g) wurde bei Normaldruck destilliert.

Kp: 72 - 74°C

Ausbeute: 38 g (42 %, bez. auf eingesetztes Buten-2)

$^{31}P$-NMR: - 113 ppm (> 98 Mol%)

Beispiel 2

Herstellung von sek-Butyl-di-n-octylphosphan

In einem 2 l-Kolben mit Rührer, Rückflußkühler und Tropftrichter wurden 75 g (0,8 Mol) sek-Butylphosphan, 900 ml (5,2 Mol) Octen-1 und 1,8 g (11 mMol) ABIN auf 80°C erwärmt. Dazu tropfte man im Verlauf von 3 Std. eine Lösung von 6,2 g ABIN in 400 ml Octen. Die Temperatur wurde über 8 Std. zwischen 80 und 85°C gehalten. Das Reaktionsprodukt destillierte man anschließend unter vermindertem Druck. Nach Abziehen der Leichtsieder wurden 190 g flüssiges, farbloses Produkt erhalten.

Kp: 152 - 156°C / 0,5 mbar

Ausbeute: 183 g (73 %, bez. auf eingesetztes Phosphan)

$^{31}P$-NMR: - 19,2 ppm (> 99 Mol%)

Beispiel 3

Herstellung von sek-Butyl-di-n-octylphosphanoxid

In einem 500 ml-Doppelmantelgefäß wurden zu 80 g (0,25 Mol) sek-Butyl-di-n-octylphosphan unter Wasserkühlung und intensivem Rühren 40 g $H_2O_2$ (0,35 Mol, 30 %ige Lösung) getropft. Nach Beendigung der Zugabe wurde die Reaktionslösung für 30 Minuten auf 70°C erwärmt, wobei der Rührer abgestellt wurde. Die sich unten absetzende wässerige Phase wurde abgetrennt. Man dosierte 4,5 ml Natriumcarbonatlösung (30 g/l) hinein, wobei der pH-Wert von 5,6 auf 9,2 anstieg. Nach einer Rührperiode von 1 Std. bei 80°C ließ man absitzen, trennte die wässerige Phase ab und destillierte das Rohprodukt im Vakuum.

Kp: 166 - 168°C / 0,5 mbar
Ausbeute: 80,4 g (95,5 % d. Th.)
$^{31}P$-NMR: + 47,3 ppm (> 97 Mol%)

Beispiel 4

Herstellung von sek-Butyl-di-n-octylphosphansulfid

Zu 31,4 g (0,1 Mol) sek-Butyl-di-n-octylphosphan wurden bei Raumtemperatur 3,2 g (0,1 Mol) Schwefelblüte zugefügt. Unter Verbrauch des zunächst suspendierten Schwefels setzte sofort eine exotherme Reaktion ein, an deren Abklingen sich eine einstündige Nachreaktion bei 100°C anschloß. Die Reaktionsmischung war danach klar und gelb. $^{31}P$-NMR-spektroskopisch konnte nur ein Produkt nachgewiesen werden. Das Rohprodukt wurde einer Vakuumdestillation unterworfen.

Kp: 179 - 183°C / 0,3 mbar
Ausbeute: 32,1 g (93 % d.Th.)
Das Produkt kristallisierte in der Vorlage aus.
$^{31}P$-NMR: + 55,9 ppm

Beispiel 5

Herstellung eines Phosphanoxid-Gemisches ( sek.Butyl-$\overset{\overset{O}{\|}}{P}$ $R^1R^2$); $R^1$ = $R^2$ = n-Hexyl, ca. 25 Mol%; $R^1$ = $R^2$ = n-Octyl, ca. 25 Mol%; $R^1$ = n-Hexyl, $R^2$ = n-Octyl, ca. 5o Mol%.

In einem 1 l-Kolben mit Rührer, Rückflußkühler, Tropftrichter und Innenthermometer wurden 92 g (1,03 Mol) sek-Butylphosphan, 116 g (1,4 Mol) Hexen-1 und 154 g (1,4 Mol) Octen-1 gemischt und auf 70°C erwärmt. Dazu tropfte man innerhalb von 4 Stunden eine Mischung aus 84 g Hexen-1 und 112 g Octen-1, in denen 17 g Azobisvaleronitril (V65® der Fa. Wako Chemicals, JP) gelöst waren. Die gesamte Reaktionszeit betrug 8 Std. Nach $^{31}P$-NMR-spektroskopischer Kontrolle der Vollständigkeit der Reaktion entfernte man alle Leichtsieder im Ölpumpenvakuum bis zu einer Sumpftemperatur von 120°C. Rohausbeute: 288 g (98 % d.Th.) Die gesamte Menge wurde analog der Beschreibung in Beispiel 3 mit 114 g 30 %iger $H_2O_2$-Lösung oxidiert und das erhaltene Produkt (294 g 97% d.Th.) im Vakuum destilliert.

Kp: 125 - 180°C / 0,3 mbar
Ausbeute: 281 g (90 %, bez. auf eingesetztes sek-Butylphosphan)
$^{31}P$-NMR: 48,0 ppm
GC-Analyse: 22,1 % sek-Butyl-di-n-hexylphosphanoxid
49,2 % sek-Butyl-n-hexyl-n-ocytylphosphanoxid
28,3 % sek-Butyl-di-n-octylphosphanoxid
0,4 % nicht identifizierte Verbindungen

Beispiel 6

Herstellung von sek-Butyl-di-n-pentylphosphan

In einem 600 ml-Autoklaven wurden 45 g (0,5 Mol) sek-Butylphosphan, 4,1 g (5 Mol %, bez. auf eingesetztes Phosphan) ABIN und 325 g (4,8 Mol) Penten-1 eingefüllt und 6 Std. auf 80 - 90°C erwärmt. Überschüssiges Penten-1 wurde bei Normaldruck abdestilliert und das Rohprodukt im Vakuum rektifiziert.

Kp: 105 - 108°C / 5 mbar
Ausbeute: 99 g (86 % d.Th.)
$^{31}$P-NMR: - 18,4 ppm (> 98 Mol%)

Beispiel 7

Herstellung von sek-Butyl-di-n-pentylphosphanoxid

Analog der Beschreibung in Beispiel 3 wurden 90 g (0,39 Mol) sek-Butyl-di-n-pentylphosphan mit 50 g (0,49 Mol) 30 %iger $H_2O_2$-Lösung oxidiert. Das Produkt wurde destillativ aufgearbeitet.

Kp: 115 - 121°C / 0,4 mbar
Ausbeute: 88 g (92 % d.Th.)
$^{31}$P-NMR: + 47,6 ppm (> 98 Mol%)

**Ansprüche**

1. Neue s-Butyl-di-n-alkylphosphane, -phosphanoxide und -phosphansulfide der allgemeinen Formel

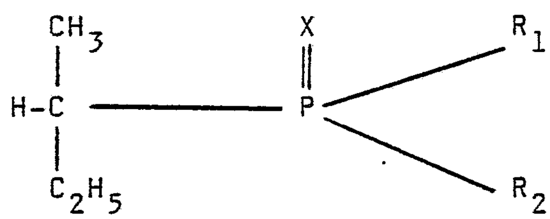

in welcher $R_1$ und $R_2$ gleiche oder verschiedene geradkettige, unsubstituierte Alkylketten mit 5, 6, 8 oder 10 C-Atomen bedeuten und in welcher X für ein Elektronenpaar, O (Sauerstoff) oder S (Schwefel) steht, sowie deren intermolekulare Gemische.

2. s-Butyl-di-n-pentylphosphan,
s-Butyl-di-n-pentylphosphanoxid und
s-Butyl-di-n-pentylphosphansulfid.

3. s-Butyl-di-n-hexylphosphan,
s-Butyl-di-n-hexylphosphanoxid und
s-Butyl-di-n-hexylphosphansulfid.

4. s-Butyl-di-n-octylphosphan,
s-Butyl-di-n-octylphosphanoxid und
s-Butyl-di-n-octylphosphansulfid.

5. s-Butyl-di-n-decylphosphan,
s-Butyl-di-n-decylphosphanoxid und
s-Butyl-di-n-decylphosphansulfid.

6. s-Butyl-n-hexyl-n-octylphosphan,
s-Butyl-n-hexyl-n-octylphosphanoxid und
s-Butyl-n-hexyl-n-octylphosphansulfid,
jeweils im intermolekularen Gemisch mit entsprechenden Verbindungen gemäß Patentansprüchen 3 und 4.

7. Verfahren zur Herstellung von s-Butyl-di-n-alkylphosphanen der allgemeinen Formel

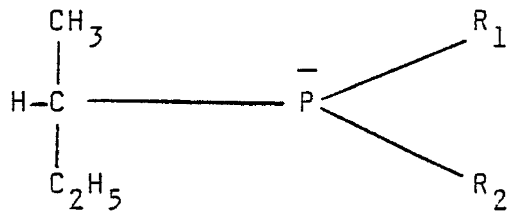

in welcher $R_1$ und $R_2$ gleiche oder verschiedene, geradkettige, unsubstituierte Alkylketten mit 2 bis 16 C-Atomen, insbesondere mit 5, 6, 8 oder 10 C-Atomen, bedeuten, dadurch gekennzeichnet, daß man s-Butylphosphan mit dem bzw. den entsprechenden n-Alken-1 im stöchiometrischen Überschuß bei erhöhten Temperaturen und gegebenenfalls unter Druck sowie in Gegenwart von Radikalbildnern zu s-Butyl-di-n-alkylphosphan umsetzt und destillativ aufarbeitet.

8. Verfahren nach Anspruch 7, dadurch gekennzeichnet, daß man die Umsetzung in einer 2-bis 10-fachen molaren Menge an n-Alken-1, bezogen auf das s-Butylphosphan, durchführt.

9. Verfahren nach einem der Ansprüche 7 oder 8, dadurch gekennzeichnet , daß man die Umsetzung bei Temperaturen von etwa 50 - 120°C und - im Falle von Ethylen, Propen, Buten und Penten als n-Alken-1 - bei Drucken zwischen 100 und 2 bar durchführt.

10. Verfahren nach einem der Ansprüche 7 bis 9, dadurch gekennzeichnet, daß als Radikalbildner Azobisisobutyronitril oder Azobisvaleronitril eingesetzt wird.

11. Verfahren nach einem der Ansprüche 7 bis 10, dadurch gekennzeichnet, daß als Reaktant ein Gemisch aus n-Alken-1 mit 5, 6, 8 oder 10 C-Atomen verwendet wird, beispielsweise eine Mischung bestehend aus etwa 50 mol% n-Okten-1 und 50 mol% n-Hexen-1.

12. Verfahren zur Herstellung von s-Butyl-di-n-alkylphosphanoxiden der allgemeinen Formel

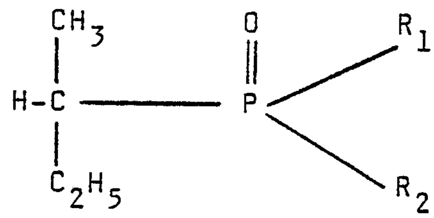

in welcher $R_1$ und $R_2$ gleiche oder verschiedene, geradkettige, unsubstituierte Alkylketten mit bis zu 16 C-Atomen, insbesondere mit 5, 6, 8 oder 10 C-Atomen, bedeuten, dadurch gekennzeichnet, daß man das entsprechende s-Butyl-di-n-alkylphosphan mit einer etwa 3o gew%igen Wasserstoffperoxid-Lösung im geringen stöchiometrischen Überschuß reagieren läßt.

13. Verfahren nach Anspruch 12, dadurch gekennzeichnet, daß man die Umsetzung unter Kühlung und Rühren durchführt und anschließend noch bei erhöhter Temperatur von etwa 60 - 90°C nachreagieren läßt.

14. Verfahren nach einem der Ansprüche 12 oder 13, dadurch gekennzeichnet, daß das eingesetzte s-Butyl-di-n-alkylphosphan nach dem Verfahren gemäß einem der Ansprüche 7 -11 hergestellt wurde.

15. Verfahren zur Herstellung von s-Butyl-di-n-alkylphosphansulfiden der allgemeinen Formel

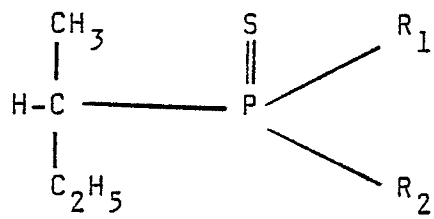

in welcher $R_1$ und $R_2$ gleiche oder verschiedene, geradkettige, unsubstituierte Alkylketten mit bis zu 16 C-Atomen, insbesondere mit 5, 6, 8 oder 10 C-Atomen, bedeuten, dadurch gekennzeichnet, daß man das entsprechende s-Butyl-di-n-alkylphosphan mit elementarem Schwefel reagieren läßt.

16. Verfahren nach Anspruch 15, dadurch gekennzeichnet, daß man die Umsetzung bei Raumtemperatur durchführt und anschließend noch bei erhöhter Temperatur von etwa 80 -120°C nachreagieren läßt.

17. Verfahren nach einem der Ansprüche 15 oder 16, dadurch gekennzeichnet, daß der Schwefel als Schwefelblüte in suspendierter Form vorliegt.

18. Verfahren nach einem der Ansprüche 15 bis 17, dadurch gekennzeichnet, daß man die Umsetzung mit einer äquimolaren Menge an Schwefel, bezogen auf das s-Butyl-di-n-alkylphosphan, durchführt.

19. Verfahren nach einem der Ansprüche 15 bis 18, dadurch gekennzeichnet, daß das eingesetzte s-Butyl-di-n-alkylphosphan nach dem Verfahren gemäß einem der Ansprüche 7 -11 hergestellt wurde.

Europäisches Patentamt

# EUROPÄISCHER RECHERCHENBERICHT

Nummer der Anmeldung

EP 87 11 0322

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 345 156 (WILKINSON SWORD LTD)<br>* Insgesamt *<br>----- | 1-19 | C 07 F 9/50<br>C 07 F 9/53 |
| | | | **RECHERCHIERTE SACHGEBIETE (Int. Cl.4)** |
| | | | C 07 F 9/00 |

Der vorliegende Recherchenbericht wurde für alle Patentansprüche erstellt

| Recherchenort | Abschlußdatum der Recherche | Prüfer |
|---|---|---|
| DEN HAAG | 25-11-1987 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)